# NEUE EUROPÄISCHE PATENTSCHRIFT

(11) **EP 1 597 442 B2**
(45) Veröffentlichungstag und Bekanntmachung des Hinweises auf die Entscheidung über den Einspruch: **02.11.2016**
(45) Hinweis auf die Patenterteilung: 07.04.2010
(21) Anmeldenummer: 04709989.0
(22) Anmeldetag: 11.02.2004
(51) Int. Cl.: E04B 2/74

(54) **ZWEISCHALIGE TRENNWAND MIT EINER F LLUNG AUS MINERALWOLLE**
DOUBLE-SHELLED SEPARATING WALL WITH A LINING MADE OF MINERAL WOOL
CLOISON A DEUX PAROIS COMPRENANT UNE MATIERE DE REMPLISSAGE EN LAINE DE ROCHE

(30) Priorität: 11.02.2003 DE 20302119 U
(43) Veröffentlichungstag der Anmeldung: 23.11.2005
(73) Patentinhaber: SAINT-GOBAIN ISOVER, 92400 Courbevoie (FR)
(72) Erfinder: ROYAR, Jürgen, 68526 Ladenburg (DE)
(74) Vertreter: Bockhorni & Kollegen
(86) Internationale Anmeldenummer: PCT/EP2004/001276
(87) Internationale Veröffentlichungsnummer: WO 2004/072397

(56) Entgegenhaltungen:
- WO-A1-2004/009927
- DE-A- 2 449 329
- DE-A- 4 030 407
- DE-A1- 10 147 831
- US-A- 3 822 764
- US-A- 4 441 580

## Beschreibung

Die Erfindung betrifft ein Trennwandelement gemäß dem Oberbegriff des Schutzanspruches 1.

Derartige Trennwandelemente aus im Abstand zueinander angeordneten Außenschalen, insbesondere Gipskartonplatten, zwischen denen eine Füllung aus einem Wärmedämmstoff vorgesehen ist, sind in der Baupraxis bekannt Sie werden bevorzugt als Raumteiler eingesetzt. Im Vergleich zu massiven Konstruktionen liegen ihre Vorteile in der Leichtbauweise, der schnellen Montage und der daraus resultierenden Kostenvorteile. Ein Aufbau einesTrennwandelementes ist z.B. aus dem Gebrauchsmuster DE 201 18 909 bekannt, bei welchem insbesondere eine Verbesserung der akustischen Eigenschaften im Vordergrund steht. Zu diesem Zweck wird bei dieser Konstruktion die Füllung in Sandwichbauweise aus mehreren Dämmstofflagen unterschiedlicher Spezifizierung hinsichtlich der Wärmedämm-. Schallschluck- und Elastizitätseigenschaften ausgeführt. Bei dem bekannten Trennwandelement nach dem Gebrauchsmuster ist ein dreilagiger Aufbau vorgesehen, der aus zwei außenliegenden Lagen hoher Rohdichte und einer innenliegenden Lage geringer Rohdichte besteht, wobei durch die Lage geringer Rohdichte eine kraft- und formschlüssige Schwingungskoppelung erzielt werden soll.

Der in dem Gebrauchsmuster DE 201 18 909 beschriebene Aufbau eines Trennwandelements hat sich zwar hinsichtlich der Verbesserung der akustischen Eigenschaften durchaus bewährt, er weist aber durch den Aufbau aus mindestens drei Lagen miteinander nicht verbundener Dämmelemente praktische Nachteile in der Ausführung auf. So kann sich während des Einbaus die mittlere Lage mit geringer Rohdichte in einer oder beiden Lagen hoher Rohdichte verhaken, insbesondere im Bereich der Ständerprofile, wodurch es zu Störungen in der laminaren Schichtstruktur der Lagen infolge von Verwerfungen der mittleren Lage kommen kann. Diese Schichtstörungen können sich nachteilig auf die akustischen Eigenschaften auswirken und zu einer geringeren Schallabsorption als im ungestörten Aufbau führen. Um derartige Nachteile zu vermeiden, ist ein relativ hoher Arbeitsaufwand hinsichtlich eines sorgfältigen Arbeitens erforderlich, um die maximale Schallabsorption der ungestörten Schichtstruktur ausnutzen zu können.

Zur Erleichterung des Einbaus werden in dem bekannten Gebrauchsmuster bandartige Umreifungen der Sandwichelemente vorgeschlagen, bei denen aber das Lösen und gegebenenfalls Entfernen dieser Umreifungen im Einbauzustand nach Anbringen der zweiten Außenschale Schwierigkeiten bereiten kann. Eine weitere Lösung sieht die Verwendung vorgefertigter einstükkiger Produkte vor, die aber ihrerseits den Nachteil vorgegebener Außenabmessungen haben.

Die Ausführung nach dem bekannten Gebrauchsmuster hat zudem einen erhöhten Logistikaufwand zur Folge, da unterschiedliche Dämmelemente mit unterschiedlichen Rohdichten für das Ausfüllen der Trennwand verwendet werden. Hinzu kommt, dass die oftmals fehlende optische Unterscheidbarkeit der Dämmelemente unterschiedlicher Rohdichte die Verwechslungsgefahr fördert, was zu einem falschen Schichtaufbau führen kann.

Aus der US 4,441,580 A1 ist ein Paneel bekannt, dass zur Geräuschdämmung als Raumteiler in Büros eingesetzt werden kann. Bei dieser leichten Trennwand handelt es sich um einen mehrschichtigen Paneelaufbau, bei dem immer ein niedrigdichtes Material innen und an seiner Außenseite ein luftundurchlässiges Material höherer Dichte sowie eine gelochte Platte aus mitteldichtem Material auf der anderen Seite angeordnet sind. Die Außenseiten müssen daher mit Stoff bespannt werden, um optisch ansprechend zu wirken. Dies macht den Aufbau kompliziert. Außerdem stellt sich das bereits aus anderen Wandaufbauten bekannte Problem, wonach zwischen zwei mehr oder weniger dichten Platten eine weiche aber große Dämmstoffplatte angeordnet werden muss, die leicht verrutscht. So kann auch hier während des Aufbaus die Dämmwolle leicht verhaken und den Aufbau verkomplizieren.

Aus DE 24 49329 ist eine schalldämmende Trennwand nach dem Oberbegriff von Anspruch 1 bekannt. Sie ist in Verleimungs-Sandwich-Bauweise ausgeführt und hat einen Kern aus Bleiblech. Ein derartiger Aufbau hat es zum Ziel die Bleiplatte in der Mitte optimal zu entkoppeln, um die Koinzidenz-Grenzfrequenz der Trennwand herauf zu setzen. Andere technisch weniger aufwändige Prinzipien sind aus dem Stand der Technik nicht bekannt.

Aufgabe der Erfindung ist es, ein Trennwandelement derart auszulegen, dass die vorteilhaften akustischen Eigenschaften des Schichtaufbaus erhalten bleiben, und gleichzeitig die Bauausführung vereinfacht und kostengünstig ermöglicht wird.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen angegebenen Merkmale gekennzeichnet sind.

Nach Maßgabe der Erfindung ist die Füllung zwischen den Außenschalen, die zumeist aus Gipskartonplatten gebildet sind, aus mindestens zwei spiegelbildlich angeordneten mehrschichtigen Dämmplatten ausgebildet, deren Schichten eine unterschiedliche Spezifizierung hinsichtlich ihrer Wärmedämm-, Schallschluck- und/oder Elastizitätseigenschaften aufweisen. dabei zeichnen sich die mehrschichtigen Dämmplatten dadurch aus, dass sie einstückig sind und aus mindestens zwei aneinander grenzenden Schichten unterschiedlicher Rohdichte bestehen. Die Schichten geringer Rohdichte werden benachbart angeordnet, so dass die Schichten hoher Rohdichte unmittelbar an die Außenschalen grenzen, welche aus Gipskartonplatten aufgebaut sind. Diese Anordnung der Dämmplatten zeichnet sich dadurch aus, dass die Schichten hoher Rohdichte mit den beiden Außenschalen schwingungsgekoppelt sind. Die Schwingungskopplung resultiert aus einem Übermaß der Füllung gegenüber dem lichten Abstand der Außenschalen, welcher im Einbauzustand zum Aufbau von Rückstellkräften in den Schichten geringer Rohdichte führt, der einen Kraft- und Formschluß der äußeren Schichten hoher Rohdichte mit den Außenschalen bewirkt. Damit zeichnet sich das Trennwandelement durch hervorragende Schalldämmeigenschaften aus.

Zweckmäßigerweise sind alle Schichten der mehrschichtigen Dämmplatten aus Mineralwolle ausgebildet.

Vorzugsweise ist die Rohdichte in der Schicht geringer Rohdichte im Bereich von 25 bis 50 kg/m³, wodurch sich sehr hohe Elastizitätseigenschaften und der Aufbau entsprechender Rückstellkräfte nach dem Einbau zwischen den Außenschalen ergibt. Die an den Außenschalen angrenzenden Schichten hoher Rohdichte sind vorzugsweise mit einer Rohdichte zwischen 150 und 250 kg/m³ ausgeführt. Durch die erfindungsgemäße Ausbildung der Füllung werden die Außenschalen mit den direkt angrenzenden Lagen möglichst schwer und federnd zum Zweck der Schalldämmung ausgelegt. Die äußeren Schichten sollen dabei vorzugsweise auch noch Federungseigenschaften aufweisen, welche für das Mitschwingen und die Schallschluckeigenschaften von Vorteil sind.

Die Verwendung von mehrschichtigen Dämmplatten reduziert den Montageaufwand für die Erstellung einer Trennwand. Probleme bei der Montage einer vorzugsweise dreilagigen Sandwich-Ausführung aus losen Dämmplatten, insbesondere der geordnete laminare Schichtaufbau werden durch die vorteilhafte Ausführung mit zwei spiegelbildlich angeordneten Dämmplatten erheblich verringert. Somit ist eine schnelle und kostengünstige Montage gewährleistet. Die Schichten hoher und geringer Rohdichte mehrschichtiger Dämmplatten lassen sich optisch einfach identifizieren, so dass eine Verwechslung und somit eine fehlerhafte Ausführung des Aufbaus ausgeschlossen ist. Weiterhin wird der Logistikaufwand erheblich reduziert, da bei der spiegelbildlichen Anordnung mit vorzugsweise gleichen mehrschichtigen Dämmplatten nur ein Produkt beschafft, zwischengelagert und verarbeitet werden muß. Damit gewährleistet die erfindungsgemäße Verwendung von mehrschichtigen Dämmplatten als Füllung einer Trennwand in besonders hohem Maße eine baulich einfache und kostengünstige Ausführung.

Das erfindungsgemäße Trennwandelement kann auch als Verbundelement in verschiedenen Formen ausgebildet sein. So kann die Füllung aus den mehrschichtigen Dämmplatten auch als Halbzeug ausgebildet sein, wobei die beiden Dämmplatten in der geeigneten Anordnung fest miteinander verbunden sind, etwa durch Verkleben. Ebenfalls ist es möglich, das Trennwandelement als Fertigelement auszubilden, wobei die äußeren Dämmstoffschichten mit den beiden Außenschalen und auch die Dämmplatten untereinander fest verbunden, etwa verklebt sind.

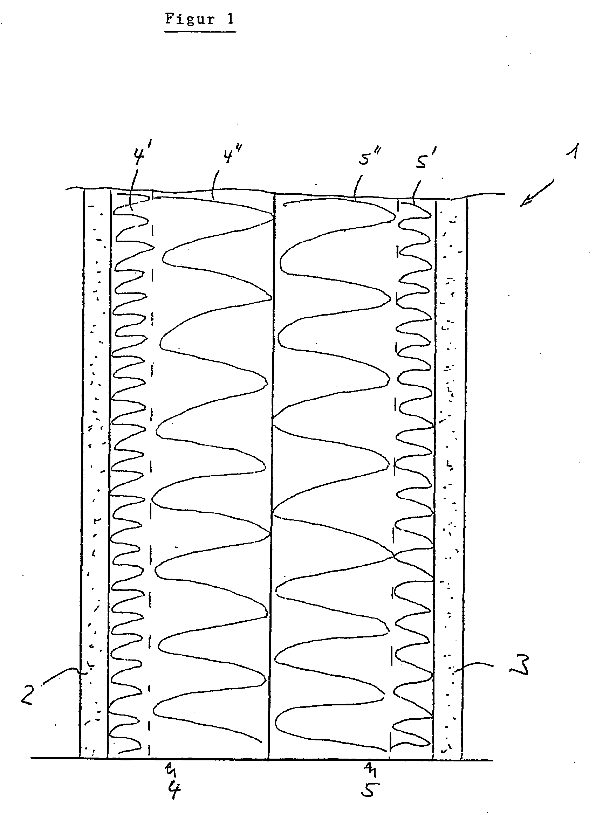

Nachfolgend wird ein bevorzugtes Ausführungsbeispiel der Erfindung anhand der einzigen Figur beschrieben, welche in schematischer Darstellung einen Querschnitt durch einen Teil eines Trennwandelements zeigt.

Das in der Figur dargestellte Trennwandelement - bezeichnet mit 1- weist zwei Außenschalen 2 und 3 auf, welche die beiden Außenflächen des Trennwandelements 1 bilden und zumeist aus Gipskarton hergestellt sind. Innerhalb dieser mit Abstand zueinander angeordneten Außenschalen 2 und 3 ist eine Füllung eingebracht, die im dargestellten Ausführungsbeispiel aus zwei spiegelbildlich angeordneten Dämmplatten 4 und 5 besteht. Die mehrschichtigen Dämmplatten 4 und 5 sind aus Mineralwolle hergestellt. Es werden gleiche mehrschichtige Dämmplatten verwendet.

Die mehrschichtigen Dämmplatten 4 und 5 werden so angeordnet, dass ihre Schichten hoher Rohdichte - bezeichnet mit 4' und 5'- an die beiden Außenschalen 2 und 3 angrenzen. Die beiden Schichten geringer Rohdichte - bezeichnet mit 4" und 5" - grenzen aneinander. Sämtliche Schichten 4', 4", 5' und 5" sind so ausgebildet, dass sie Federungseigenschaften aufweisen. Die Elastizität der Schichten geringer Rohdichte 4" und 5" zeichnet sich gegenüber den Schichten hoher Rohdichte 4' und 5' durch eine vergleichsweise hohe Elastizität auf. Sie ist so eingestellt, dass bei Einbau mit einem gewissen Übermaß die Schichten geringer Rohdichte 4" und 5" bevorzugt zusammengedrückt und in ihnen Rückstellkräfte aufgebaut werden, die einen Kraft- und Formschluß der Schichten hoher Rohdichte 4' und 5' mit den Außenschalen 2 und 3 herstellen. Dieser bewirkt die gewünschte Schwingungskopplung der Außenschalen 2 und 3 mit den Schichten hoher Rohdichte 4' und 5'. Der aus Kraft- und Formschluß resultierende Aufbau mit hoher Masse ergibt sehr vorteilhafte Akustikeigenschaften bei gleichzeitig guten Dämmeigenschaften des Trennwandelements.

Im dargestellten Ausführungsbeispiel beträgt der lichte Abstand der beiden Außenschalen 2 und 3 100 mm. Als Füllung werden zwei spiegelbildlich angeordnete mehrschichtige Dämmplatten 4 und 5 mit jeweils einer Schicht hoher Rohdichte 4' bzw. 5' und einer Schicht geringer Rohdichte 4" bzw. 5" mit einer Gesamtdicke der Dämmplatte von jeweils 52 mm eingesetzt. Bezogen auf den lichten Abstand der Außenschalen 2 und 3 ergibt sich ein Einbauübermaß von 4 mm. Die Rohdichte der Schichten geringer Rohdichte 4" und 5" beträgt etwa 30 kg/m³, die der Schichten hoher Rohdichte 4' und 5' etwa 170 kg/m³. Nach dem Einbau resultieren Rückstellkräfte auf die außenliegenden Schichten hoher Rohdichte 4' und 5', die einen Form- und Kraftschluß mit den Außenschalen 2 und 3 und eine akustische Schwingungskopplung bewirken.

In einer alternativen Ausführungsform kann der lichte Abstand zwischen den beiden Außenschalen 2 und 3 50 mm betragen. Die Gesamtdicke einer mehrschichtigen Dämmplatte 4, zu der eine zweite gleiche Dämmplatte 5 spiegelbildlich angeordnet ist, ist in diesem Fall 27 mm. Für die Rohdichte kann in den Schichten hoher Rohdichte 4' bzw. 5' etwa 160 kg/m³, in den Schichten geringer Rohdichte 4" bzw. 5" etwa 30 kg/m³ gewählt werden.

Die Erfindung ist keinesfalls auf die beschriebenen beiden Ausführungsbeispiele und die genannten Werte eingeschränkt.

## Patentansprüche

1. Trennwandelement für Raumteiler und dergleichen, gebildet aus mindestens zwei mit Abstand zueinander angeordneten Außenschalen und einer im Hohlraum zwischen den Außenschalen angeordneten Füllung mit Wärmedämmstoff Mineralwolle, wobei
die Füllung zwischen den Außenschalen (2; 3) aus mindestens zwei zueinander in Bezug auf die zwischen den Außenschalen verlaufende Symmetrieachse spiegelbildlich angeordneten mehrschichtigen Dämmplatten (4; 5) ausgebildet ist, wobei die Dämmplatten zwischen den Außenschalen angeordnet sind und deren Schichten (4', 4"; 5', 5") eine unterschiedliche Spezifizierung hinsichtlich ihrer Wärmedämm-, Schallschluck- und/oder Elastizitätseigenschaften aufweisen, wobei die Dämmplatten wenigstens zwei aneinandergrenzende Schichten unterschiedlicher Rohdichte aufweisen und so angeordnet sind, dass die Schichten mit geringer Rohdichte (4"; 5") innen benachbart sind und Schichten mit hoher Rohdichte (4'; 5') außen an die jeweilige Außenschale (2; 3) angrenzen und wobei jede mehrschichtige Dämmplatte (4; 5) einstückig ausgebildet ist
**dadurch gekennzeichnet, dass**
die Außenschalen als Gipskartonplatten ausgebildet sind und dass die mehrschichtigen Dämmplatten (4; 5) in Summe dicker sind als ein lichter Abstand zwischen den Gipskartonplatten, so dass durch elastische Verformung in den Schichten mit geringer Rohdichte eine Rückstellkraft aufgebaut wird, wobei die Füllung dichte- und/oder materialmäßig auf einen Strömungswiderstand von mindestens etwa 5 kPa•s/m2 eingestellt ist.

2. Trennwandelement nach Anspruch 1,
**dadurch gekennzeichnet, dass**
die zwei Schichten (4', 4"; 5', 5") unterschiedlicher Rohdichte eine solche mit einer hohen Rohdichte (4'; 5') zwischen 150 und 250 kg/m³ und eine solche mit einer geringen Rohdichte (4"; 5") zwischen 25 und 50 kg/m³ sind.

3. Trennwandelement nach einem der vorhergehenden Ansprüche,
**dadurch gekennzeichnet, dass**
die Füllung zwischen den zwei Außenschalen (2; 3) derart durch zwei der mehrschichtigen Dämmplatten (4; 5) gebildet ist, dass daran die jeweilige Schicht mit der hohen Rohdichte (4'; 5') an die Außenschalen (2; 3) angrenzt und die jeweiligen Schichten geringer Rohdichte (4"; 5") benachbart sind.

4. Trennwandelement nach Anspruch 3,
**dadurch gekennzeichnet, dass**
die an die Außenschalen (2; 3) angrenzenden Schichten mit der hohen Rohdichte (4'; 5') mit den Außenschalen (2; 3) schwingungsgekoppelt sind.

5. Trennwandelement nach Anspruch 4,
**dadurch gekennzeichnet, dass**
die Füllung ein Übermaß bezüglich des lichten Abstands zwischen den Außenschalen (2; 3) hat.

6. Trennwandelement nach Anspruch 5,
**dadurch gekennzeichnet, dass**
das Übermaß derart gewählt ist, dass im Einbauzustand die an die Außenschalen (2; 3) grenzenden Schichten hoher Rohdichte (4'; 5') durch Rückstellkräfte der Schichten geringer Rohdichte (4"; 5") an die Außenschalen (2; 3) gedrückt sind.

7. Trennwandelement nach einem der vorhergehenden Ansprüche,
**dadurch gekennzeichnet, dass**
die mehrschichtigen Dämmplatten bei einem Einsatz zwischen einem lichten Abstand der Außenschalen (2; 3) von 50 mm in den Schichten mit der hohen Rohdichte (4'; 5') eine solche von etwa 160 kg/m³ und in den Schichten mit geringer Rohdichte (4"; 5") eine solche von etwa 30 kg/m³, bei einem Einsatz zwischen einem lichten Abstand der Außenschalen (2;'3) von 100 mm in den Schichten mit der hohen Rohdichte (4'; 5') eine solche von etwa 170 kg/m³ und in den Schichten mit geringer Rohdichte (4"; 5") eine solche von etwa 30 kg/m³ aufweisen.

8. Trennwandelement nach einem der vorhergehenden Ansprüche,
**dadurch gekennzeichnet, dass**
die mehrschichtigen Dämmplatten (4; 5) aus Mineralwolle, insbesondere Steinwolle, bestehen.

9. Trennwandelement nach einem der vorhergehenden Ansprüche,
**dadurch gekennzeichnet, dass**
die Füllung als vorgefertigtes Halbzeug aus fest verbundenen mehrschichtigen Dämmplatten (4; 5) ausgebildet ist.

10. Trennwandelement nach einem der vorhergehenden Ansprüche,
**dadurch gekennzeichnet, dass**
dieses aus den Außenschalen (2; 3) und der Füllung aus den mehrschichtigen Dämmplatten (4; 5) als vorgefertigtes Produkt ausgebildet ist.

## Claims

1. Separating wall element for room dividers and the like, formed by at least two outer shells disposed spaced apart from one another and a lining with mineral wool as heat insulating material disposed in the cavity between the outer shells, wherein the lining between the outer shells (2; 3) is formed by at least two multi-layered insulating panels (4; 5) disposed in mirror image to one another with respect to the axis of symmetry extending between the outer shells, wherein the insulating panels are disposed between the outer shells and the layers 4', 4"; 5', 5") thereof have different specifications with regard to their heat-insulating, sound-absorbing and/or resilience characteristics, wherein the insulating panels have at least two layers adjoining one another with different bulk densities and are disposed in such a way that the layers with the low bulk density (4"; 5") are inwardly adjacent and the layers with the high bulk density (4'; 5') outwardly adjoin the respective outer shell (2; 3), and wherein each multi-layered insulating panel (4; 5) is constructed in one piece, **characterised in that** the outer shells are constructed as gypsum plasterboard panels and that the multi-layered insulating panels (4; 5) are thicker in total than a clear spacing between the gypsum plasterboard panels, so that a restoring force is built up by resilient deformation in the layers with low bulk density, wherein in terms of density and/or material the lining is set to a flow resistance of at least approximately 5 kPa·s/m².

2. Separating wall element as claimed in Claim 1, **characterised in that** the two layers (4', 4"; 5', 5") with different bulk densities are a layer with a high bulk density (4'; 5') between 150 and 250 kg/m³ and a layer with a low bulk density (4"; 5") between 25 and 50 kg/m³.

3. Separating wall element as claimed in any one of the preceding claims, **characterised in that** the lining between the two outer shells (2; 3) is formed by two of the multi-layered insulating panels (4; 5) in such a way that the respective layer with the high bulk density (4'; 5') adjoins the outer shells (2; 3) and the respective layers with the low bulk density (4"; 5") are adjacent.

4. Separating wall element as claimed in Claim 3, **characterised in that** the layers with the high bulk density (4'; 5') adjoining the outer shells (2; 3) are vibrationally coupled to the outer shells (2; 3).

5. Separating wall element as claimed in Claim 4, **characterised in that** the lining is oversized relative to the clear spacing between the outer shells (2; 3).

6. Separating wall element as claimed in Claim 5, **characterised in that** the oversize is chosen in such a way that in the installed state the layers with a high bulk density (4'; 5') adjoining the outer shells (2; 3) are pressed onto the outer shells (2; 3) by restoring forces of the layers with a low bulk density (4"; 5").

7. Separating wall element as claimed in any one of the preceding claims, **characterised in that** when used in a clear spacing between the outer shells (2; 3) of 50 mm in the layers with the high bulk density (4'; 5') the multi-layered insulating panels have a bulk density of approximately 160 kg/m³ and in the layers with the low bulk density (4"; 5") they have a bulk density of approximately 30 kg/m³, and when used in a clear spacing between the outer shells (2; 3) of 100 mm in the layers with the high bulk density (4'; 5') the multi-layered insulating panels have a bulk density of approximately 170 kg/m³ and in the layers with the low bulk density (4"; 5") they have a bulk density of approximately 30 kg/m³.

8. Separating wall element as claimed in any one of the preceding claims, **characterised in that** the multi-layered insulating panels (4; 5) are made from mineral wool, in particular rock wool.

9. Separating wall element as claimed in any one of the preceding claims, **characterised in that** the lining is produced as a prefabricated semi-finished product comprising firmly joined multi-layered insulating panels (4; 5).

10. Separating wall element as claimed in any one of the preceding claims, **characterised in that** it is produced as a prefabricated product from the outer shells (2; 3) and the lining comprising the multi-layered insulating panels (4; 5).

## Revendications

1. Elément de cloison pour mur séparatif et ouvrage semblable, formé par au moins deux coques extérieures disposées à distance l'une de l'autre et par un remplissage, disposé dans l'espace creux formé entre les coques extérieures, comportant de la laine minérale formant matériau calorifuge, le remplissage entre les coques extérieures (2 ; 3) étant formé par au moins deux panneaux isolants multicouches (4 ; 5) disposés symétriquement l'un de l'autre, par rapport à l'axe de symétrie s'étendant entre les coques extérieures, les panneaux isolants étant disposés entre les coques extérieures et leurs couches (4', 4"; 5', 5") présentant une spécification différente concernant leurs propriétés d'isolation thermique, d'insonorisation et / ou d'élasticité, les panneaux isolants comportant au moins deux couches à masse volumique apparente différente, contiguës l'une à l'autre, et étant disposés de manière telle, que les couches à faible masse volumique apparente (4" ; 5") soient voisines intérieurement et que les couches à masse volumique apparente élevée (4' ; 5') soient contiguës, extérieurement, à la coque extérieure respective (2 ; 3), et chaque panneau isolant multicouche (4 ; 5) étant configuré d'un seul tenant, **caractérisé en ce que** les coques extérieures sont configurées en plaques de parement en plâtre et **en ce que** les panneaux isolants multicouches (4 ; 5) sont, au total, plus épais qu'un espacement intérieur entre les plaques de parement en plâtre, de sorte qu'une force de rappel est établie, sous l'effet d'une déformation élastique dans les couches à faible masse volumique apparente, le remplissage étant réglé, concernant la densité et / ou la matière, sur une résistance à l'écoulement d'au moins approximativement 5 kPa.s/m².

2. Elément de cloison selon la revendication 1, **caractérisé en ce que** les deux couches (4', 4" ; 5', 5") à masse volumique apparente différente sont constituées d'une couche ayant une masse volumique apparente élevée (4' ; 5') comprise entre 150 kg/m³ et 250 kg/m³ et d'une couche ayant une faible masse volumique apparente (4" ; 5") comprise entre 25 kg/m³ et 50 kg/m³.

3. Elément de cloison selon l'une des revendications précédentes, **caractérisé en ce que** le remplissage entre les deux coques extérieures (2 ; 3) est formé par deux des panneaux isolants multicouches (4 ; 5), de manière telle que la couche respective sur le panneau isolant, ayant la masse volumique apparente élevée (4' ; 5'), soit contiguë aux coques extérieures (2 ; 3), les couches respectives à faible masse volumique apparente (4" ; 5") étant voisines.

4. Elément de cloison selon la revendication 3, **caractérisé en ce que** les couches contiguës aux coques extérieures (2 ; 3) et ayant la masse volumique apparente élevée (4' ; 5') sont couplées en vibration avec les coques extérieures (2 ; 3).

5. Elément de cloison selon la revendication 4, **caractérisé en ce que** le remplissage a une cote majorée par rapport à l'espacement intérieur entre les coques extérieures (2 ; 3).

6. Elément de cloison selon la revendication 5, **caractérisé en ce que** la cote majorée est choisie de manière telle que, à l'état monté, les couches à masse volumique apparente élevée (4' ; 5') contiguës aux coques extérieures (2 ; 3) soient pressées contre les coques extérieures (2 ; 3) sous l'effet de forces de rappel des couches à faible masse volumique apparente (4" ; 5").

7. Elément de cloison selon l'une des revendications précédentes, **caractérisé en ce que** les panneaux isolants multicouches, dans le cas d'une mise en oeuvre avec un espacement intérieur des coques extérieures (2 ; 3) de 50 mm, présentent, dans les couches à masse volumique apparente élevée (4' ; 5'), une masse volumique apparente d'environ 160 kg/m³ et, dans les couches à faible masse volumique apparente (4" ; 5"), une masse volumique apparente d'environ 30 kg/m³, et dans le cas d'une mise en oeuvre avec un espacement intérieur des coques extérieures (2 ; 3) de 100 mm, présentent, dans les couches à masse volumique apparente élevée (4' ; 5'), une masse volumique apparente d'environ 170 kg/m³ et, dans les couches à faible masse volumique apparente (4" ; 5"), une masse volumique apparente d'environ 30 kg/m³.

8. Elément de cloison selon l'une des revendications précédentes, **caractérisé en ce que** les panneaux isolants multicouches (4 ; 5) sont en laine minérale, en particulier en laine de roche.

9. Elément de cloison selon l'une des revendications précédentes, **caractérisé en ce que** le remplissage, en tant que demi-produit préfabriqué, est constitué de panneaux isolants multicouches (4 ; 5) solidement assemblés.

10. Elément de cloison selon l'une des revendications précédentes, **caractérisé en ce que** cet élément de cloison, en tant que produit préfabriqué, est constitué des coques extérieures (2 ; 3) et du remplissage formé par les panneaux isolants multicouches (4 ; 5).
